# EUROPÄISCHE PATENTANMELDUNG

(11) **EP 2 246 200 A1**
(43) Veröffentlichungstag der Anmeldung: **03.11.2010**
(21) Anmeldenummer: 10151608.6
(22) Anmeldetag: 26.01.2010
(51) Int. Cl.: B60C 1/00, C08L 9/00, C08L 19/00, C08K 5/103, C08K 5/548, C08K 3/36, C08K 3/04, C08K 3/00, C08K 5/00, C08L 7/00

(54) **Kautschukmischung mit verbessertem Rollwiderstand und verbessertem Nassbremsen**

(30) Priorität: 28.04.2009 DE 102009003839
(71) Anmelder: Continental Reifen Deutschland GmbH, 30165 Hannover (DE)
(72) Erfinder: Wagemann, Jürgen, 31162, Bad Salzdethfurth (DE); Mueller, Norbert, 29336, Nienhagen (DE); Rose, Christoph, 30659, Hannover (DE); Soehnen, Dietmar, 31867, Lauenau (DE); Van de Pol, Casper, 30177, Hannover (DE); Tkachenko, Viktoriya, 30171, Hannover (DE)
(74) Vertreter: Finger, Karsten

(57) **Zusammenfassung**

Die Erfindung betrifft eine Kautschukmischung, insbesondere für Fahrzeugluftreifen, Gurte, Riemen und Schläuche.

Die Kautschukmischung ist dabei durch folgende Zusammensetzung gekennzeichnet:
- 80 bis 100 phr zumindest eines vollständig oder teilweise funktionalisierten Styrolbutadienkautschuks und
- 0 bis 25 phr zumindest eines weiteren polaren oder unpolaren Kautschuks und
- 0,01 bis 20 phr zumindest eines Rußes und
- 1 bis 300 phr zumindest einer Kieselsäure, wobei die Kieselsäurepartikel mit einer Korngröße zwischen 50nm und 35nm ein Porenvolumen zwischen 2 und 5 ml/g besitzen und
- 0,1 bis 40 phr zumindest eines Mercaptosilans und
- 0,1 bis 50 phr zumindest eines Saatenöls, und
- weitere Zusatzstoffe

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.

Um diese Zielkonflikte zu lösen, sind schon vielfältige Ansätze verfolgt worden. So hat man beispielsweise unterschiedlichste, auch modifizierte, Polymere, Weichmacher und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher zum Beispiel eine Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, und / oder das Konfektionier- und das Klebverhalten zu verbessern. Gleichzeitig sollen sich durch diese Maßnahme natürlich die physikalischen Eigenschaften der Mischung und der daraus hergestellten Vulkanisate nicht verschlechtern.

In DE10108981A1 wird beispielsweise vorgeschlagen, dass die Kautschukmischung für den Laufstreifen von Fahrzeugluftreifen Proteine aus Ölsaaten enthält. Derartige Kautschukmischungen zeigen eine verbesserte Winterperformance, d.h. ein verbessertes Verhalten des Fahrzeugluftreifens auf Eis und Schnee.

Derartige Saatenöle, wie z.B. Rapsöl, sind u.a. aus EP0708169B1 zur Verwendung als Gleit- und Pflegemittel für Gummi bekannt.

Zur Verbesserung des Rollwiderstandsverhaltens wird in EP0501227B1 eine mit Schwefel vulkanisierbare Kautschukmischungen mit einer speziellen hochdispergierbaren Fällungskieselsäure verstärkt.

Aus dem genannten Stand der Technik ist allerdings nicht hinreichend und ausreichend bekannt, wie sich das Rollwiderstandsverhalten, insbesondere für Fahrzeugluftreifen, Gurte und Riemen, weiter verbessern lässt und sich gleichzeitig ein positiver Effekt bezüglich des Nassbremsverhaltens ergibt.

Der Erfindung liegt daher die Aufgabe zu Grunde, eine Kautschukmischung, insbesondere für Fahrzeugluftreifen, Gurte und Riemen, bereitzustellen, die ein verbessertes Rollwiderstandsverhalten bei gleichzeitig verbessertem Nassbremsen aufweist.

Gelöst wird diese Aufgabe durch eine Kautschukmischung mit folgender Zusammensetzung:
- 80 bis 100 phr zumindest eines vollständig oder teilweise funktionalisierten Styrolbutadienkautschuks und
- 0 bis 20 phr zumindest eines weiteren polaren oder unpolaren Kautschuks und
- 0,01 bis 25 phr zumindest eines Rußes und
- 1 bis 300 phr zumindest einer Kieselsäure, wobei die Kieselsäurepartikel mit einer Korngröße zwischen 50nm und 35nm ein Porenvolumen zwischen 2 und 5 ml/g besitzen und
- 0,1 bis 40 phr zumindest eines Mercaptosilans und
- 0,1 bis 50 phr zumindest eines Saatenöls, und
- weitere Zusatzstoffe.

Überraschenderweise wurde gefunden, dass sich durch die Kombination eines vergleichsweise hohen Anteils von 80 bis 100 phr zumindest eines teilweise oder vollständig funktionalisierten Styrolbutadienkautschuks und 30 bis 250 phr zumindest einer Kieselsäure, wobei die Kieselsäurepartikel mit einer Korngröße zwischen 50nm und 35nm ein Porenvolumen zwischen 2 und 5 ml/g besitzen, und 0,1 bis 40 phr zumindest eines Mercaptosilans mit 0,1 bis 50 phr zumindest eines Saatenöls sich das Rollwiderstandsverhalten und das Nassbremsverhalten deutlich verbessern lässt. Gleichzeitig zeigen sich auch Vorteile hinsichtlich Abriebsverhaltens der erfindungsgemäßen Kautschukmischung.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält 80 bis 100 phr, bevorzugt 90 bis 100 phr und besonders bevorzugt 95 bis 100 phr, zumindest eines teilweise oder vollständig funktionalisierten Styrolbutadienkautschuks. Die Funktionalisierung findet hierbei vorzugsweise durch Hydroxylgruppen und / oder Epoxygruppen und / oder Siloxangruppen und / oder Aminogruppen und / oder Phtalocyaningruppen und / oder Aminosiloxangruppen und / oder mit Carboxygruppen statt. Es kommen aber auch weitere, der fachkundigen Person bekannte Funktionalisierungen, auch als Modifizierungen bezeichnet, in Frage.

Bevorzugt ist es allerdings, wenn der Styrolbutadienkautschuk teilweise oder vollständig mit Aminogruppen und / oder mit Aminosiloxangruppen funktionalisiert ist.

Es ist auch durchaus möglich, dass der Styrolbutadienkautschuk mit unterschiedlichen Gruppen funktionalisiert ist. Beispielsweise kann an jedem Kettenende eine unterschiedliche Funktionalisierung vorhanden sein.

Der Styrolbutadienkautschuk ist vorzugsweise lösungspolymerisiert (SSBR) oder emulsionspolymerisiert (ESBR). Eine Mischung aus teilweise oder vollständig funktionalisiertem SSBR mit teilweise oder vollständig funktionalisiertem ESBR ist möglich.

Weiterhin enthält die Kautschukmischung 0 bis 20 phr zumindest eines weiteren polaren oder unpolaren Kautschuk, welcher ausgewählt ist aus der Gruppe, bestehend aus natürlichem Polyisopren und / oder synthetischem Polyisopren und / oder ButadienKautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.

Es hat sich als vorteilhaft gezeigt, wenn es sich hierbei um ein natürliches (NR) oder synthetisches (IR) Polyisopren und / oder einen Butadienkautschuk (BR) handelt. Diese finden dann vorzugsweise Verwendung in Mengen von 0 bis 10 phr, bevorzugt 0 bis 5 phr, wenigstens aber in Mengen von 0,1 phr, insbesondere wenigstens aber in Mengen von 0,5 phr.

Des Weiteren enthält die erfindungsgemäße Kautschukmischung 0,01 bis 25 phr, bevorzugt 1 bis 20 phr, besonders bevorzugt 5 bis 15 phr, zumindest eines Rußes. Hier kommen alle der fachkundigen Person bekannten Ruße in Frage.

In einer besonders bevorzugten Ausführungsform hat der Ruß eine Iodzahl, gemäß ASTM D 1510, die auch als Iodadsorptionszahl bezeichnet wird, größer oder gleich 75 g / kg und einer DBP-Zahl größer oder gleich 80 cm³ /100g, bevorzugt größer oder gleich 115 cm³ /100g. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Die erfindungsgemäße Kautschukmischung enthält 1 bis 300 phr, bevorzugt 1 bis 250 phr, besonders bevorzugt 1 bis 200 phr, wiederum besonders bevorzugt 30 bis 200 phr, wiederum ganz besonders bevorzugt 30-150 phr, Kieselsäure. Erfindungswesentlich ist es, dass die Kieselsäurepartikel mit einer Korngröße zwischen 50nm und 35nm ein Porenvolumen zwischen 2 und 5 ml/g, bevorzugt zwischen 2 und 4 ml/g, besitzen. Nur dann zeigen sich in Kombination mit dem verwendeten Mercaptosilan und dem eingesetzten Saatenöl die oben genannten Vorteile.

Die Bestimmung des Porenvolumens erfolgt hierbei durch Porosimetrie anhand Quecksilberintrusion gemäß DIN 66133.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche (BET) zwischen 145 und 450 m²/g und einer CTAB-Oberfläche zwischen 150 und 250 m²/g eingesetzt.

Weiterhin enthält die Kautschukmischung 0,1 bis 40 phr, bevorzugt 1 bis 15 phr, zumindest eines Mercaptosilans.

Besonders zu erwähnen sind hierbei Mercaptosilane, welche geschützt oder ungeschützt sein können, und hierbei insbesondere solche, welche sich durch eine Reduzierung der leicht flüchtigen organischen Bestandteile auszeichnen, wie sie, beispielhaft für weitere Druckschriften, in DE102005057801, WO99/09036, WO2002/048256 und W02006/015010 zu finden sind.

Deartige Mercaptosilane sind zum Beispiel unter dem Handelsnamen Si363 von Evonik Industries erhältlich. Es können aber auch die unter den Handelsnamen bekannten NXT-, NXT low VOC- oder NXT-Z-Typen, erhältlich von Momentive Performance Materials inc., verwendet werden.

Wie bereits erwähnt führt erst die Kombination eines teilweise oder vollständig funktionalisierten Styrolbutadienkautschuks und der beschriebenen Kieselsäure mit Mercaptosilan und Saatenöl zu der Lösung der gestellten Aufgabe.

Das Saatenöl wird in Mengen von 0,1 bis 30 phr, bevorzugt in Mengen von 1 bis 20 phr, besonders bevorzugt in Mengen von 1 bis 10 phr, verwendet.

In einer vorteilhaften Ausführungsform handelt es sich bei dem Saatenöl um Rapsöl. Möglich ist aber auch die Verwendung von Sonnenblumenöl, Kornöl, d.h. Mais- oder Maiskeimöl, und weiterer Saatenöle. Das verwendete Saatenöl kann hierbei durchaus als Gemisch verschiedener Saatenöle vorliegen, wobei es vorteilhaft ist, wenn der Hauptgewichtsanteil des Gemisches aus Rapsöl besteht.

Es können in der Kautschukmischung noch 0 bis 25 phr, bevorzugt 0,1 bis 20 phr, zumindest eines weiteren Weichmachers vorhanden sein.

Dieser Weichmacher ist ausgewählt aus der Gruppe, bestehend aus Mineralölen und / oder synthetischen Weichmachern und / oder Harzen und / oder Faktisse und / oder Glyceriden und / oder Terpenen und / oder flüssige Polymere mit einem Molekulargewicht M_{w} zwischen 1500 und 10000 g / mol..

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.

Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten. Vorteilhaft ist es, wenn die erfindungsgemäße Kautschukmischung 0,1 bis 2.5 phr, bevorzugt 0,2 bis 1.0 phr, TBzTD als Vulkanisationsbeschleuniger enthält.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Reifen, insbesondere zur Herstellung des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Cap.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt zumeist analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die in der Tabelle 2 zusammengefassten Versuchsergebnisse wurden an Reifen der Größe 205/55 R16 ermittelt. Hierzu wurde jeweils die Kautschukmischung für die Lauffläche des Reifens analog den in der Tabelle 1 dargestellten Zusammensetzungen und Verfahren hergestellt.

Das ABS-Nassbremsverhalten wurde bestimmt durch den Bremsweg aus 80 km/h bei nasser Fahrbahn. Die Werte für den Abrieb stellen den Gewichtsverlust nach 10.000 km Fahrleistung dar. Der Rollwiderstand entspricht der Rollwiderstandskraft, die auf der entsprechenden Maschine bei 90 km/h gemessen wird.

Die Wintereigenschaft wurde bestimmt durch die mittlere Traktionskraft bei Beschleunigungsfahrt auf verschneiter Fahrbahn zwischen 9 und 42% Schlupf, sowie der Bremsverzögerung auf eisiger Fahrbahn aus Startgeschwindigkeit von 30 km/h. Das Schneeergebnis wird zu 2/3 und das Eisergebnis zu 1/3 gewichtet.

**Tabelle 1**

| **Bestandteile** | **Einheit** | **V1** | **V2** | **V3** | **V4** | **V5** | **E1** |
|---|---|---|---|---|---|---|---|
| NR^{a} | phr | 5 | 5 | 5 | 5 | 5 | 5 |
| SSBR^{b} | phr | 95 | 95 | 95 | 95 | 95 | 95 |
| Kieselsäure^{c} | phr | 90 | -- | 90 | 90 | -- | -- |
| Kieselsäure^{d} | phr | -- | 90 | -- | -- | 90 | 90 |
| Ruß, N121 | phr | 5 | 5 | 5 | 5 | 5 | 5 |
| Silan^{e} | phr | -- | -- | 10,8 | -- | 10,8 | 10,8 |
| Silanⁱ | phr | 6,5 | 6,5 | -- | 6,5 | -- | -- |
| Weichmacher^{f} | phr | 26 | 26 | 26 | 16 | 26 | 16 |
| Weichmacher^{g} | phr | -- | -- | -- | 10 | -- | 10 |
| ZnO | phr | 2 | 2 | 2 | 2 | 2 | 2 |
| Alterungsschutzmittel /Ozonschutzmittel | phr | 7,8 | 7,8 | 7,8 | 7,8 | 7,8 | 7,8 |
| Verarbeitungs-hilfsmittel^{h} | phr | 1 | 1 | 1 | 1 | 1 | 1 |
| DPG | phr | 2,2 | 2,2 | 0,3 | 2,2 | 0,3 | 0,3 |
| CBS | phr | 2,2 | 2,2 | 2,2 | 2,2 | 2,2 | 2,2 |
| TBzTD | phr | -- | -- | 0,5 | -- | 0,5 | 0,5 |
| Schwefel | phr | 1,7 | 1,7 | 1,7 | 1,7 | 1,7 | 1,7 |

| | | | | | | | |
|---|---|---|---|---|---|---|---|
| ^{a} TSR; ^{b} Nipol NS116R, Fa. Zeon, aminofunktionalisiert; ^{c} VN3, Fa. Evonik (BET 173 m²/g, CTAB 164 m²/g, Porenvolumen [50nm-0,35nm] 0,66 ml/g); ^{d} Zeosil 1165MP, Fa. Rhodia (BET 149 m²/g, CTAB 154 m²/g, Porenvolumen [50nm-0,35nm] 2,18 ml/g); ^{e} Si363, Fa. Evonik; ^{f} TDAE; ^{g} Rapsöl, ^{h} Aminofettsäure und Aminofettsäurederivate; ⁱ TESPD Silquest A1589 (Momentive Performance Materials) | | | | | | | |

**Tabelle 2**

| **Reifeneigenschaft** | **V1** | **V2** | **V3** | **V4** | **V5** | **E1** |
|---|---|---|---|---|---|---|
| ABS-Nassbremsen | 100 | 100 | 96 | 100 | 100 | 102 |
| Rollwiderstand | 100 | 100 | 114 | 100 | 114 | 114 |
| Wintereigenschaft | 100 | 100 | 110 | 105 | 110 | 120 |
| Abrieb | 100 | 110 | 90 | 100 | 100 | 100 |

Anhand der Tabelle 2 zeigt sich, dass ein gutes Rollwiderstandsverhalten bei sich verbesserndem Nassbremsen nur durch die erfindungsgemäße Kautschukmischung gewährleistet werden kann. Die Zahlenangaben sind normiert, d.h. die Standard-Referenz V1 ist auf 100 normiert. Werte größer 100 bedeuten eine Verbesserung der jeweiligen Reifeneigenschaft und Werte kleiner 100 dementsprechend eine Verschlechterung der jeweiligen Reifeneigenschaft.

Überraschenderweise zeigt die erfindungsgemäße Kautschukmischung, siehe E1, nicht nur die deutlich Verbesserung im Zielkonflikt Nassbremsen und Rollwiderstand, sondern bietet darüber hinaus noch verbesserte Wintereigenschaften, d.h. deutlich erhöhte Griffigkeit, auf Schnee und Eis.

## Patentansprüche

1. Kautschukmischung, **gekennzeichnet durch** folgende Zusammensetzung:
- 80 bis 100 phr zumindest eines vollständig oder teilweise funktionalisierten Styrolbutadienkautschuks und
- 0 bis 20 phr zumindest eines weiteren polaren oder unpolaren Kautschuks und
- 0,01 bis 25 phr zumindest eines Rußes und
- 1 bis 300 phr zumindest einer Kieselsäure, wobei die Kieselsäurepartikel mit einer Korngröße zwischen 50nm und 35nm ein Porenvolumen zwischen 2 und 5 ml/g besitzen und
- 0,1 bis 40 phr zumindest eines Mercaptosilans und
- 0,1 bis 50 phr zumindest eines Saatenöls, und
- weitere Zusatzstoffe.

2. Kautschukmischung nach Anspruch 1, **dadurch gekennzeichnet, dass** sie 90 bis 100 phr zumindest eines vollständig oder teilweise funktionalisierten Styrolbutadienkautschuks enthält.

3. Kautschukmischung nach einem der Ansprüche 1 bis 2, **dadurch gekennzeichnet, dass** der Styrolbutadienkautschuk mit Hydroxylgruppen und / oder Epoxygruppen und / oder Siloxangruppen und / oder Aminogruppen und / oder Phtalocyaningruppen und / oder Aminosiloxangruppen und / oder mit Carboxy-Gruppen vollständig oder teilweise funktionalisiert ist.

4. Kautschukmischung nach einem der Ansprüche 1 bis 3, **dadurch gekennzeichnet, dass** sie 1 - 250 phr Kieselsäure enthält.

5. Kautschukmischung nach einem der Ansprüche 1 bis 4, **dadurch gekennzeichnet, dass** die Kieselsäure eine BET-Oberfläche zwischen 145 m²/g und 450 m²/g und eine CTAB-Oberfläche zwischen 150 m²/g und 250 m²/g hat.

6. Kautschukmischung nach einem der Ansprüche 1 bis 5, **dadurch gekennzeichnet, dass** die Menge des Mercaptosilans 1 - 15 phr beträgt.

7. Kautschukmischung nach einem der Ansprüche 1 bis 6, **dadurch gekennzeichnet, dass** sie 1 bis 20 phr eines Saatenöls enthält.

8. Kautschukmischung nach einem der Ansprüche 1 bis 7, **dadurch gekennzeichnet, dass** es sich bei dem Saatenöl um Rapsöl handelt.

9. Kautschukmischung nach einem der Ansprüche 1 bis 8, **dadurch gekennzeichnet, dass** der Mengenanteil an weiteren Zusatzstoffen 3 - 150 phr beträgt.

10. Verwendung einer Kautschukmischung nach einem der Ansprüche 1 bis 9 zur Herstellung eines Reifens.

11. Verwendung einer Kautschukmischung nach Anspruch 10 zur Herstellung des Laufstreifens eines Reifens.

12. Verwendung einer Kautschukmischung nach Anspruch 10 zur Herstellung einer Body-Mischung eines Reifens.

13. Verwendung einer Kautschukmischung nach Anspruch 12 zur Herstellung einer Body-Mischung eines Reifens, beinhaltend Seitenwand, Innenseele, Apex, Gürtel, Schulter, Gürtelprofil, Squeege, Karkasse, Wulstverstärker und / oder Bandage.

14. Verwendung einer Kautschukmischung nach einem der Ansprüche 1 bis 9 zur Herstellung eines Gurtes, Riemens oder Schlauches.
